# EUROPEAN PATENT SPECIFICATION

(11) **EP 0 397 756 B1**
(45) Date of publication and mention of the grant of the patent: **15.05.1996**
(21) Application number: 89902030.9
(22) Date of filing: 24.01.1989
(51) Int. Cl.: A23N 17/00, A01D 87/12, A01F 25/00

(54) **EQUIPMENT FOR LYE TREATING OF PRESSED STRAW BALES**
VORRICHTUNG ZUR AMMONIAKBEHANDLUNG VON ZUSAMMENGEDRÜCKTES STROHBALLEN
EQUIPEMENT SERVANT AU TRAITEMENT A L'AMMONIAQUE DE BALLES DE PAILLE PRESSEES

(30) Priority: 25.01.1988 DK 318/88
(43) Date of publication of application: 22.11.1990
(73) Proprietor: KORSGAARD, Ebbe, DK-7960 Karby (DK)
(72) Inventor: KORSGAARD, Ebbe, DK-7960 Karby (DK)
(74) Representative: Skoett-Jensen, Knud
(86) International application number: DK8900007
(87) International publication number: WO8906499

(56) References cited:
- WO-A-82/00235
- GB-A- 2 196 227

## Description

The present invention relates to equipment for treating of pressed straw bales or the like with a treating fluid in the form of lye or ammonia, and of the type specified in the introductory clause of claim 1. An ammonia treatment of straw bales can be carried out by supplying ammonia to a sealed room where the bales are placed, but according to GB-B-2,090,112 and EP-A-0,111, 434 it is considered more advantageous that an injection of the liquid ammonia be effected direct into each single bale by means of injection spears, which in an appropriate manner can be jabbed into the bale by being mounted on the front loading system of a tractor, whereby the spears serve the further purpose of being carrier spears for the bales; i.e. the treatment can be effected at least partly simultaneously with the bale being transported. The bales will have to be moved from the places in the field where they were originally deposited to a storage area, and when the tractor is fitted with the necessary equipment the ammonia treating can be performed en route.

However, for this technique it proves a complication that bales of various sizes and forms have to be handled. Both the size and the form are decisive for where the injection spears have to be mutually situated and the size decides the amount of ammonia to be injected into each bale. Admittedly a widespread standardizing exists, but all the same five or six different types of bales occur, square as well as round ones, and their weight vary from 200 kg to 600 kg or even more or less, respectively.

Though some farmers may have their own equipment for shaping and handling bales of a selected type it will frequently be a machine pool that owns the equipment or at least the ammonia treating unit thereof, and such units should preferably be more universally usable with the bales of the different farms.

The purpose of the invention is to provide a treating equipment which is well suited to handling and treating all types of bales found in actual practice.

According to the invention this purpose is achieved by placing at least some of the injector spears on individual carrier members which are fixably and crosswise displaceably held on a base part. Of course one or more central, fixed spears may be provided which are suitable for all sizes of bales, but when the adjustable spears have been set to a fairly even distribution of the spears in the bale an even distribution of the ammonia all over tha bale will be achieved and this on its own is significiant. When used on a front loader the spear head will also provide for an effective carrying of the bales, with all spears engaging the bale. One and the same spear head may consequently be used for bales of varying sizes in an optimal manner as far as both the carrying and the treating of the bales are concerned.

For the dosing of the ammonia it has up till now been presupposed that a bale of a given standard size requires a given amount of ammonia which could then be dosed by a timer controlled valve between the ammonia tank and the spear head once it has been measured how much ammonia it hereby dispensed per time unit. It turns out, however, that the ammonia cannot in this manner be dosed optimally, i.e. both effectively and economically.

According to the invention advantage is taken of the fact that the bales are lifted individually by the loading apparatus and that it is hereby possible to effect an automatic weighing of the bales and an accordingly adapted automatic controlling of the dosage in order to achieve an optimizing to exactly the actual weight. Already for bales of the same type the weight can vary considerably and as it is frequently a matter of quite a number of bales even a small overdosing can incur a substantial waste in cost, while on the other hand a slight underdosing can lead to an inferior result of treatment. By the invention an automatic adjustment according to the actual weight of the bales can take place, and at the same time an automatic distinguishing between the various types of bales will be achievable, i.e. the operator only has to ensure that the bale is not unloaded till the injection has been completed; this of course is easily achieved by using suitable indication means.

The automatic weighing of the bales can be effected simply by means of a pressure transducer inserted between the carrying and the carried system in the loading apparatus. Most front loaders are hydraulically activated and it is quite simple to connect a pressure transducer to the hydraulic system and thereby obtain a transducer signal which in a well-defined manner will vary according to the weight of the picked-up bale such that the signal via a correspondingly adjusted control unit can be utilized for controlling the timing of the dosing.

It should be emphasized that a pure timing control according to the weight of the individual bale certainly will entail a substantial improvement on known methods, but, however, may still not result in an optimum dosage. That is to say it may be a question of the outlets in the spears being more or less tightly covered by the compacted bale material such that within a certain time the expected amount of liquid will not necessarily be injected, and furthermore the pressure in the ammonia tank may vary a little causing the same result.

On this background a preferred embodiment according to the invention has a flow gauge inserted in the liquid conduit, this flow gauge being connected to the actual control unit for correction of the injection time in such a manner that it is duly considered that a specific amount of liquid should be injected into a bale of a given weight. It might even be said that the control is not at all a timing control but a forthright quantity control.

The said control unit may be a comparatively simple computer which may even be used for supplying various relevant information via a display and/or a printer, e.g. the actual weight of the bale and the accumulated bale weight, the amount of ammonia used etc.

The invention which is further defined in the claims is described in more detail as follows with reference to the drawing in which:-
Fig.1 A-E are perspective views of a spear head of an equipment according to the invention,
Fig. 2 A-E are schematic planar views of a variety of configurations of bales having markings for the injection spears of the spear head,
Fig. 3 is a side view of a tractor with a front loader and an equipment according to the invention,
Fig. 4 is a front view of a pertaining control unit.

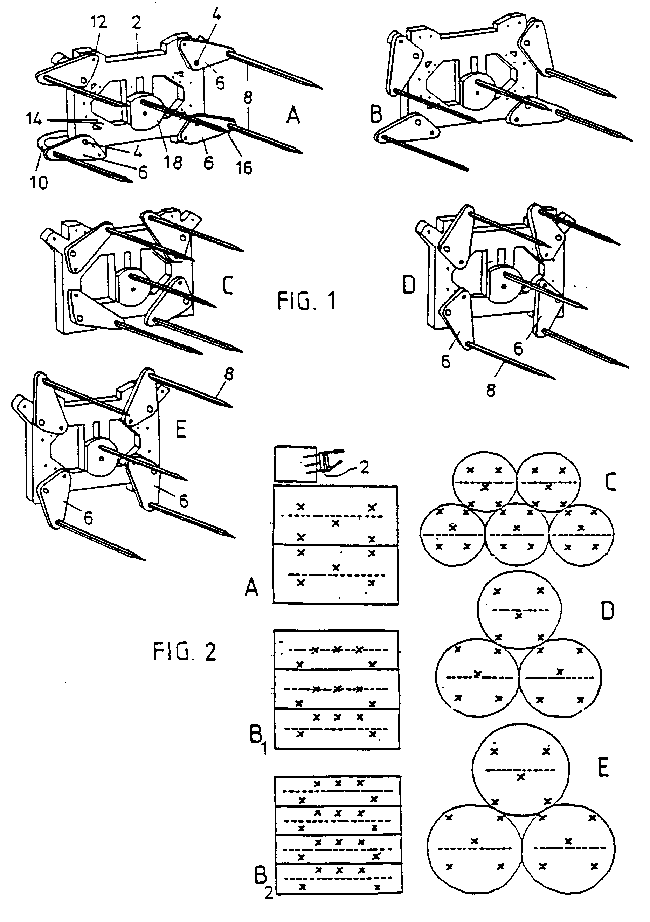

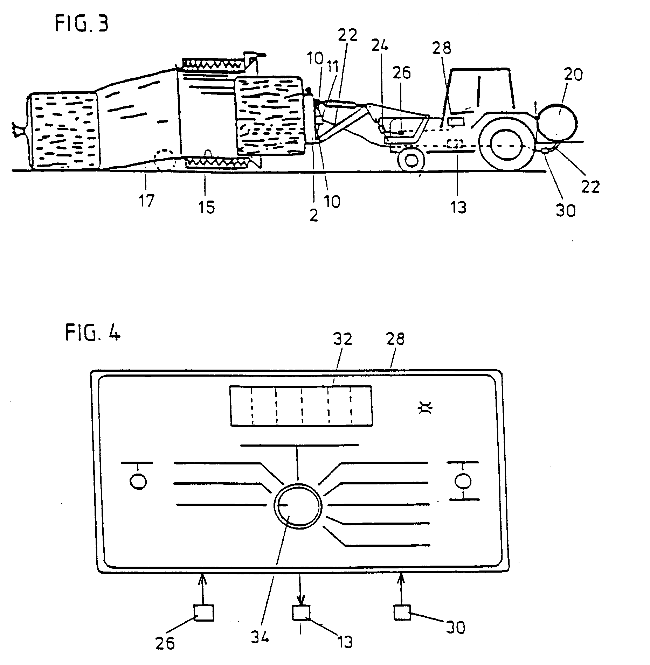

The spear head shown in Fig. 1, which can be mounted on a front loader as shown in Fig. 3, comprises a base part in the shape of a base plate 2 which near each of its four corners has an eccentric plate bracket 6 placed at the front and being pivotal around a pivot 4 and at a distance from the latter carrying a forwardly protruding spear 8, which at the rear is connected to a flexible hose 10. Furthermore each of these bracket plates 6 has an aperture 12 by means of which they can be brought into locking engagement with each of a multitude of apertures 14 shaped in the base plate 2 in a circle around the individual pivot connections 4. In the centre of the base plate 2 is situated a forwardly protruding central spear 16 which may be fixed to the base plate but which preferably is eccentrally placed on a turnable, fixable disc 18.

The hoses 10 from each of the spears 8, 16 are jointly connected to a manifold 11 located at the rear side of the base plate 2. This manifold is hose-connected to a lye fluid tank 20 on the tractor carrying the front loader on which the base plate 2 is mounted, cf. Fig. 3, and in this connection is inserted a solenoid valve 13, which can open and shut off the flow of liquid to the injection spears, these being provided with suitable, but not shown side outlets.

As is clearly visible from Fig. 1 the spears 8 can be adjusted to a variety of mutual positions and thus be adapted to different forms and sizes of bales. This is further illustrated in Fig. 2, where some stacked bales are marked with 'x'es corresponding to the intrusion places of the spears. The small sketch at the top of Fig. 2 illustrates that the spears should preferably be inserted slightly inclined into the bales.

The tractor in Fig. 3 is shown in connection with a storing device, which as disclosed in said EP-A-0,111, 434 is used for building up a protected store of bales in the field, the bales being put through a funnel element 15 into a hose 17 of plastic sheet, whereby a long row of bales can be built up by successively moving forward the funnel element, from which the hose is paid out. The bales can be led into the hose in a single row (Fig. 3) or for forming several rows next to and/or on top of one another (Fig. 2). The tractor is provided with an ammonia tank 20 which through a hose 22 is connected to the said manifold 11 for the spears. In this hose is inserted the said solenoid valve 13 for dosing the ammonia for the bales.

The front loader used with the tractor has on each side a lifting cylinder 24, and in the hydraulic connection thereto is arranged a pressure transducer 26 which is connected to a computer 28, Fig. 4, which, after having been tested and calibrated, is designed to convert the transducer signal into the weight of the bale being lifted and to thereupon determine the dosage of ammonia for the bale in question.

The relevant parameter is here the amount of ammonia, and in order to obtain a good accuracy, a flow gauge 30 is inserted in the conduit 22 such that the dosage valve after activation is kept open until the actual amount of ammonia has been dosed. The starting of the dosing may be effected manually or by sensor means affirming that the spears have been fully introduced into the bale.

The computer may have a display 32 and a selector 34 facilitating the reading of various relevant values.

It should be noted that the invention is not limited to the spear head being mounted on a tractor loader, as the treatment might well take place based on the use of a stationary equipment, where the bales be pressed against a fixed spear head, e.g. by using a tractor bucket. In the fixed equipment, too, weighing means may be used, either in connection with a spear head suspended from or supported by one or more weighing cells or by using a special weighing or carrying plate in front of the spears. These might be designed for being pushed forwardly and rearwardly such that all it takes is placing the base on the corner plate.

Accordingly it is insignificant with respect to the invention in which manner the bales are treated or wrapped after the lye treatment. There are known other methods and apparatuses for wrapping the bales, and it is perfectly possible to combine also such apparatuses with a bale weighing station and an associated injection station, e.g. having one or more spears to be driven into and retracted from the bale while the bale is otherwise supported. It will be appreciated that according to the dozing-by-weight-aspect of the invention there is no primary requirement as to the disposition of the injection means, when the bales should not additionally be carried by the spears. One or more spears may be provided for general or selective use, preferably in a stationary or movable station immediately next to the weighing station.

A further preferred feature of the present invention is that the control unit 28 may be additionally connected with a sensor for the moisture content of the bale material, whereby the computer can determine the percentage of dry matter and adjust the ammonia dosage correspondingly. Simple moisture sensors based on electric conductivity are readily available, and such a sensor can easily be mounted on one of the spears of the illustrated embodiment or on an injection spear of any other embodiment or even on a separate spear or other relevant carrier just for that purpose.

On the other hand, the use of the said adjustable spears could imply a very rough dosing control, viz. by means of sensor or selector means operable to adapt the dosing to the anticipated weight of the standard size bales to be handled by each single setting pattern of the spears. Even in that connection it may be highly advantageous to make use of the described dosing by flow metering, even without weighing the bales.

## Claims

1. An equipment for treating of pressed straw bales or the like with lye or ammonia, comprising a spear head with injection spears for injection into a bale and a tank (20) for lye or ammonia connected to the spear head as well as a control unit (28) for controlling the operation of a valve (13) in the supply line (22) between tank and spears, characterized in that at least some of the injection spears (8,16) are placed on individual carrier members (6,18) which are fixably and crosswise displaceably held on a base part (2).

2. An equipment according to claim 1, in which the carrier members are constituted by eccentric plate members (6,18), which are pivotable and lockable relative to the base part (2) in different mutual positions thereon.

3. An equipment according to claim 1, characterized in that it comprises a device for weighing the bale and for automatically affecting the control unit to control the lye or ammonia dosage depending on the measured weight of the bale.

4. An equipment according to claim 3 where the spear head is mounted on a tractor carried hydraulically activated lift implement, characterized in that the weighing system comprises a pressure transducer (24) connected to the hydraulic system and to the control unit (28), respectively.

5. An equipment according to any preceding claim, characterized in that a flow guage (30) is arranged in the connection between the lye or ammonia tank (20) and the spear head (2,4,8), this flow gauge being connected to the control unit (28) for controlling the dosage according to quantity requirements, preferably depending on a prior weighing of the bale.

## Patentansprüche

1. Ein Gerät zur Behandlung gepreßter Strohballen oder dergleichen mit Lauge oder Ammoniak, umfassend einen Stangenkopf mit Injektionsspitzen zur Injektion in einen Ballen und einen mit dem Stangenkopf verbundenen Tank (20) für Lauge oder Ammoniak sowie eine Steuereinheit (28) zum Steuern des Betriebs eines Ventils (13) in der Zuführleitung (22) zwischen Tank und Spitzen, dadurch gekennzeichnet, daß mindestens einige der Injektionsspitzen (8, 16) auf einzelnen Trägerelementen (6, 18) angeordnet sind, die feststellbar und quer verlagerbar auf einem Grundteil (2) gehalten sind.

2. Ein Gerät nach Anspruch 1, bei dem die Trägerelemente von exzentrischen Plattenteilen (6, 18) gebildet sind, die schwenkbar und relativ zu dem Grundteil (2) in verschiedenen Stellungen zueinander darauf verriegelbar sind.

3. Ein Gerät nach Anspruch 1, dadurch gekennzeichnet, daß es eine Einrichtung zum Wiegen des Ballens und zur automatischen Beaufschlagung der Steuereinheit zur Steuerung der Laugen- oder Ammoniakdosierung in Abhängigkeit von dem ermittelten Gewicht des Ballens umfaßt.

4. Ein Gerät nach Anspruch 3, bei dem der Stangenkopf an einer Traktor-getragenen und hydraulisch betätigten Hebeeinrichtung gelagert ist, dadurch gekennzeichnet, daß das Wiegesystem einen Druckumformer (24) umfaßt, der mit dem Hydraulik-System bzw. der Steuereinheit (28) verbunden ist.

5. Ein Gerät nach einem der vorhergehenden Ansprüche, dadurch gekennzeichnet, daß in der Verbindung zwischen dem Lauge- oder Ammoniaktank (20) und dem Stangenkopf (2, 4, 8) ein Strömungsmeßgerät (30) angeordnet ist, das mit der Steuereinheit (28) zur Steuerung der Dosierung gemäß den Mengenerfordernissen, vorzugsweise in Abhängigkeit von einem vorherigen Wiegen des Ballens, verbunden ist.

## Revendications

1. Equipement pour traiter des balles de paille pressées ou analogue avec une lessive ou de l'ammoniaque, comprenant une tête à tiges avec des tiges d'injection pour l'injection dans une balle, et un réservoir (20) pour la lessive ou l'ammoniaque relié à ladite tête à tiges, ainsi qu'une unité de commande (28) pour commander le fonctionnement d'une valve (13) dans la ligne d'alimentation (22) entre le réservoir et les tiges,
caractérisé en ce qu'au moins certaines des tiges d'injection (8,16) sont placées sur des organes de support individuels (6,18) qui sont maintenus, de façon fixe et déplaçable transversalement, sur une pièce de base (2).

2. Equipement selon la revendication 1,
dans lequel les organes de support sont constitués par des organes à plaque excentrique (6,18), qui sont aptes à pivoter et à être verrouillés par rapport à la pièce de base (2) dans différentes positions mutuelles sur celle-ci.

3. Equipement selon la revendication 1,
caractérisé en ce qu'il comprend un dispositif pour peser la balle et pour affecter automatiquement l'unité de commande à commander le dosage de lessive ou d'ammoniaque selon le poids mesuré de la balle.

4. Equipement selon la revendication 3, où la tête à tiges est montée sur un accessoire de levage actionné hydrauliquement, porté par un tracteur,
caractérisé en ce que le système de pesage comprend un transducteur de pression (24) relié au système hydraulique et à l'unité de commande (28), respectivement.

5. Equipement selon une quelconque des revendications précédentes,
caractérisé en ce qu'un calibre d'écoulement (30) est agencé dans la liaison entre le réservoir de lessive ou d'ammoniaque (20) et la tête à tiges (2,4,8), ce calibre d'écoulement étant relié à l'unité de commande (28) pour commander le dosage selon les besoins en quantité, de préférence selon un pesage préalable de la balle.
